Europäisches Patentamt

European Patent Office

Office européen des brevets

(11) Numéro de publication : **0 246 936 B1**

# (12) FASCICULE DE BREVET EUROPEEN

(45) Date de publication du fascicule du brevet :
**13.03.91 Bulletin 91/11**

(51) Int. Cl.⁵ : **C21C 1/08**, C03B 9/48,
C22C 37/04

(21) Numéro de dépôt : **87400852.7**

(22) Date de dépôt : **15.04.87**

(54) **Pièces moulées en fonte, notamment moules de verrerie, à structure de fonte variable dans l'épaisseur des pièces.**

(30) Priorité : **17.04.86 FR 8605545**

(43) Date de publication de la demande :
**25.11.87 Bulletin 87/48**

(45) Mention de la délivrance du brevet :
**13.03.91 Bulletin 91/11**

(84) Etats contractants désignés :
**AT BE CH DE ES FR GB GR IT LI LU NL SE**

(56) Documents cités :
**US-A- 3 349 831**
**US-A- 3 421 886**

(56) Documents cités :
**SPRECHSAAL, Ceramic Glass Cement, vol. 117, no. 9, septembre 1984, pages 756-758,760,762,763, Verlag des Sprechsaal Müller und Schmidt, Coburg, DE; W. BUTZ: "Anforderungen an Gusseisen für den Glasformenbau und seine Herstellung"**

(73) Titulaire : **ANCIENS ETABLISSEMENTS CAFFIER & BARREAU**
**F-76340 Blangy-sur-Bresle (FR)**

(72) Inventeur : **Chalon, Jean-Claude**
**7 route de Neufchatel**
**F-76340 Blangy sur Bresle (FR)**

(74) Mandataire : **Combe, André et al**
**CABINET BEAU DE LOMENIE 55, rue d'Amsterdam**
**F-75008 Paris (FR)**

## Description

La présente invention concerne des pièces en fonte ayant une structure variable dans leur épaisseur, lesdites pièces étant notamment des moules de verrerie.

Les fontes (alliages à base de fer et de carbone) actuellement utilisées appartiennent à deux grandes familles, selon l'aspect des particules de graphite qu'elles contiennent, à savoir les fontes lamellaires et les fontes nodulaires dont la famille comporte comme terme le plus achevé les fontes sphéroïdales à l'exclusion des fontes malléables. Les propriétés des fontes de chacune de ces familles sont parfaitement connues.

On a récemment décrit des procédés pour la préparation de fontes qui paraissent être intermédiaires entre ces deux types de fontes ; ces nouvelles fontes formeraient une troisième famille appelée fonte à graphite "vermiculaire" ou encore fonte à graphite "compact vermiculaire" du fait que les concrétions de carbone dispersées dans la matrice en fer apparaissent sous forme de sphérules plus ou moins déformées en forme de vers.

Mais il semble que jusqu'à ce jour ces fontes vermiculaires, si l'on connaît les conditions qui peuvent favoriser leur apparition, n'ont pas trouvé d'application industrielle notable, car il était difficile d'obtenir, avec ces fontes, des pièces moulées ayant une structure organisée et reproductible.

En effet lors de leur fabrication industrielle ces fontes moulées dites vermiculaires présentent en leur structure, tant en surface que dans leur masse, un graphite sous forme d'un mélange de vermicules et de nodules et/ou de vermicules et lamelles, soit des trois à la fois en proportions peu stables et peu reproductibles. D'où leur emploi difficile et peu souhaité jusqu'alors en application industrielle.

Cette non-reproductibilité vient de ce que lesdites fontes vermiculaires, lorsque l'on tente de les utiliser selon des procédés industriels, présentent toujours des proportions non reproductibles et non contrôlables de fonte nodulaire. Les pièces industrielles obtenues présentent donc dans leur masse et à leur surface une structure que l'on ne peut pas contrôler et dont on peut difficilement assurer la reproductibilité.

C'est pourquoi le technicien spécialiste considérait généralement que l'utilisation industrielle des fontes vermiculaires était très difficile et que l'apparition de fonte de type vermiculaire dans une pièce moulée en fonte n'était pas un phénomène souhaitable.

Il a été trouvé maintenant, et c'est là l'objet de la présente invention, qu'il est possible d'obtenir des pièces moulées, présentant des propriétés intéressantes, à base de fonte vermiculaire à condition qu'au moins une des surfaces travaillantes desdites pièces soit constituée, sur une certaine épaisseur, d'une fonte à structure nodulaire, préférablement du type sphéroïdal.

L'invention concerne donc les pièces moulées en fonte dont une ou des surfaces, partiellement ou totalement, sont constituées en fonte nodulaire, le reste de la pièce sur ses surfaces autres et dans sa masse étant constitué totalement ou presque totalement en fonte vermiculaire.

Comme indiqué ci-dessus, la partie "nodulaire" de la pièce en fonte peut comporter, très généralement sur sa surface, une partie de fonte sphéroïdale. Il a été prouvé que l'existence de cette fonte sphéroïdale (c'est-à-dire plus précisément d'une fonte nodulaire qui comporte au moins 90% de fonte sphéroïdale) permettait l'obtention des meilleurs résultats. La présence de fonte nodulaire et plus précisément sphéroïdale, sur une partie de la surface de la pièce, permet de bénéficier totalement au niveau de cette surface des propriétés intéressantes de la fonte à structure nodulaire (ou sphéroïdale) notamment pour ce qui concerne l'aptitude au polissage et l'aptitude à la soudure et à la métallisation. L'épaisseur de la fonte à structure totalement nodulaire ou sphéroïdale peut, selon les conditions de moulage, être de 5 à 25 mm d'épaisseur environ.

Il est essentiel de noter que, grâce à la réalisation sur au moins une des surfaces travaillantes des pièces moulées selon l'invention d'une couche de fonte nodulaire, on obtient pour ladite partie travaillante une structure parfaitement organisée et parfaitement contrôlable. Ainsi, l'inconvénient majeur rencontré jusqu'à maintenant lors de l'utilisation industrielle des fontes vermiculaires, à savoir une quasi-impossibilité de reproduire une structure donnée, peut être aisément surmonté en transformant localement (en surface) lesdites fontes vermiculaires en fontes nodulaires, préférablement du type sphéroïdal.

Au-delà de cette couche superficielle de fonte à structure nodulaire, on constate, en se déplaçant vers l'intérieur du matériau, que la structure de la fonte se modifie en évoluant vers une fonte à structure vermiculaire. Cela se traduit, au microscope, par une déformation progressive des nodules de graphite qui passent d'une forme sphérique (caractéristique de la structure sphéroïdale) ou sensiblement ovoïde (caractéristique de la forme nodulaire) à une forme plus ou moins allongée, comme un ver qui est la caractéristique de la forme vermiculaire. Quand le matériau est d'épaisseur relativement faible, la fonte peut ne pas devenir totalement vermiculaire mais dès que le matériau est d'épaisseur notable (par exemple 30 à 40 mm) on observe la présence, au voisinage de la surface dudit matériau qui est la plus éloignée de la face à fonte nodulaire, d'une fonte totalement ou quasi totalement vermiculaire.

Le procédé de préparation des matériaux moulés en fonte à structure variable selon l'invention se caractérise essentiellement en ce que la fonte fondue, qui reçoit les catalyseurs et additifs connus en quantité néces-

2

saire et suffisante pour permettre l'organisation de structures variables recherchées (nodule et vermicule), est coulée dans un moule dont l'une des parois au moins est du type refroidisseur. On sait que ces catalyseurs et additifs sont par exemple à base de ferro silico magnésium–agissant apparemment pour favoriser la germination–et de titane agissant apparemment pour contrarier l'effet desdits germes. Il est à noter que d'autres catalyseurs et additifs peuvent aussi déclencher la germination recherchée notamment l'utilisation du cérium et des terres rares en doses appropriées.

Par paroi du type refroidisseur, on entend une paroi constituée par un matériau conducteur de la chaleur (qui permet donc l'évacuation de la chaleur contenue dans la fonte coulée) ; ainsi, il suffit selon l'invention de remplacer la paroi de sable (généralement utilisée pour la confection des moules devant recevoir la coulée de fonte) par une paroi de fonte pour que, au contact de cette paroi, la pièce en fonte obtenue après démoulage présente une couche de fonte "nodulaire et sphéroidale" dans sa partie en contact et proche du refroidisseur, et présente une structure de plus en plus vermiculaire dans ses parties de plus en plus éloignées du refroidisseur, qui est la caractéristique de l'invention. Bien évidemment, ladite paroi de type refroidisseur peut constituer une ou plusieurs des parois (ou des parties seulement desdites parois) du moule de fonderie.

Pour obtenir une pièce moulée ayant une structure reproductible, on pourra agir sur l'évacuation des calories de fonte en fusion à travers la paroi de type refroidisseur, par exemple en respectant un certain rapport entre la masse du refroidisseur et la masse de la pièce moulée, tout en ajustant les quantités de catalyseurs et additifs propres à favoriser la germination.

On notera que le brevet US 3 349 831 décrit des fontes composites et des pièces moulées à base de ces fontes proches de celles de la présente invention. Une différence essentielle entre ce qui est décrit dans ledit brevet US et ce qui est décrit dans la présente invention est que, dans le brevet US, la fonte qui est utilisée est une fonte de type lamellaire contenant certains constituants qui peuvent donner naissance, localement, à une fonte de type nodulaire, alors que, dans la présente demande, on utilise une fonte de type vermiculaire contenant les constituants qui peuvent donner naissance, localement, à une fonte de type nodulaire. Cette différence est importante car, si l'on utilise une fonte lamellaire comme celle décrite dans le brevet US, il se forme localement, comme décrit dans ledit brevet, une couche de graphite dense (couche 12) qui, formant barrière, modifie fortement et de façon indésirable les propriétés de la pièce moulée obtenue.

Les pièces moulées selon la présente invention peuvent avoir des applications très variées, toutes celles où l'on recherchera à la fois les propriétés intéressantes (notamment de conductibilité thermique) de la fonte vermiculaire qui constitue la masse de la pièce et les propriétés spécifiques (la dureté, la résistance à la traction, l'allongement %, la limite élastique, l'aptitude à la soudure et à la métallisation, la facilité de polissage, la facilité de gravure permettant de tailler des formes compliquées) de la fonte en surface, nodulaire ou préférablement sphéroïdale.

Il a été trouvé que les moules de verrerie constituaient, dans l'état actuel des connaissances, l'application préférée des pièces en fonte dont le matériau présente la structure décrite ci-dessus. L'invention concerne donc, en tant que produits nouveaux, lesdits moules de verrerie.

On sait que ces moules de verrerie (utilisés dans la préparation des bouteilles ou des objets divers en verre) doivent subir de nombreuses contraintes mécaniques et thermiques et doivent de plus présenter une surface finement usinable et polissable (celle qui sera en contact avec le verre fondu) et des possibilités de soudure avec d'autres métaux. Il a été trouvé que, grâce à ses propriétés propres, le matériau à structure de fonte variable répondait favorablement à ce cahier de charges et que, selon l'invention, il permettait une amélioration des rendements de l'opération de fabrication des pièces moulées en verre en favorisant les échanges thermiques à travers l'épaisseur du moule et l'allongement de la durée de vie du moule.

En pratique l'utilisation des fontes à structure variable de la présente invention pour la confection des moules de verrerie (du fait que lesdites fontes par rapport aux fontes sphéroïdales permettent une évacuation plus rapide des calories et présentent des propriétés mécaniques améliorées par rapport aux fontes lamellaires) permet d'obtenir des avantages importants.

Parmi ces avantages, on peut citer :

– une amélioration du rendement de l'ensemble de l'opération de moulage des pièces en verre, soit en procurant, toutes choses égales par ailleurs, une meilleure tenue dans le temps du moule, soit en permettant une augmentation des cadences de moulage du fait que l'on peut introduire dans le moule un verre plus chaud ;

– une diminution des risques de déformation et une diminution des fissures tout en faisant fonctionner le moule suivant des gradients de températures plus élevés ;

– et une meilleure résistance des surfaces du moule en contact avec le verre chaud (ce qui se traduit également par une diminution des fissures à la surface interne du moule) grâce à une résistance améliorée aux chocs thermiques, une fidélité plus affinée de reproduction des reliefs imprimés par la surface travaillante du moule sur la peau du verre moulé ainsi qu'un meilleur poli de la surface travaillante du moule per-

3

mettant de rehausser l'éclat du verre.

L'exemple non limitatif suivant illustre l'invention.

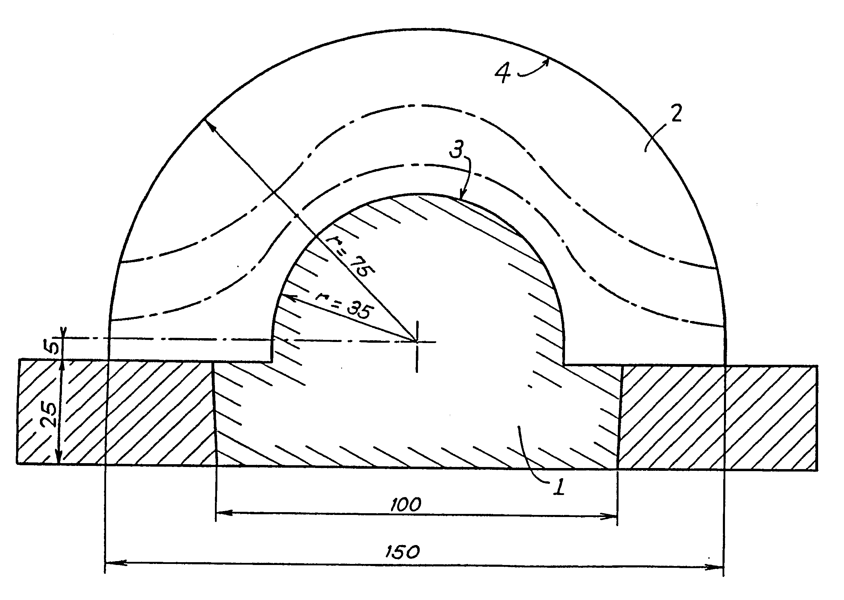

On a réalisé un moule de verrerie dont on a représenté sur la figure 1 une coupe transervale.

Pour réaliser ce moule, on coule la fonte dans une "boîte" en sable qui comporte un insert métallique utilisé comme élément refroidisseur.

La composition de la fonte utilisée peut être, par exemple, la suivante :

| | | | |
|---|---|---|---|
| — carbone | 3,40 | — | 3,80 |
| — silicium | 1,80 | — | 2,50 |
| — manganèse | 0,05 | — | 0,80 |
| — soufre | 0,002 | — | 0,02 |
| — phosphore | 0,0025 | — | 0,30 |
| — nickel | 0,10 | — | 2 |
| — titane | 0,05 | — | 0,20 (avec ou sans) |
| — magnésium | 0,015 | — | 0,050 |
| — cérium | PPM | | |
| — terres rares | PPM | | |

Le reste étant du fer.

Le refroidisseur (1) présente un rayon r de 35 mm, et la pièce moulée (2) un rayon R de 75 mm ; le poids de la pièce moulée finie étant de 12 kg, on a utilisé un refroidisseur pesant 4 kg ; le moule de verrerie obtenu après démoulage présente une structure de fonte pratiquement entièrement sphéroïdale sur sa surface (3) qui a été en contact avec le refroidisseur et présente une structure à 90% vermiculaire au voisinage de sa surface (4).

## Revendications

1. Moules pour verrerie, obtenus par moulage d'une fonte, caractérisés en ce qu'ils sont constitués, pour la partie desdits moules destinée à entrer en contact avec le verre fondu, par une épaisseur de 5 à 25 mm de fonte nodulaire sphéroïdale et pour le reste desdits moules, par une fonte dont la structure évolue progressivement dans l'épaisseur du matériau, du nodulaire sphéroïdal vers le vermiculaire.

2. Procédé de préparation des moules de verrerie ayant la structure définie dans la revendication 1, caractérisé en ce que l'on verse une fonte en fusion, comportant des quantités convenables des catalyseurs et additifs connus pour donner naissance aux fontes nodulaires sphéroïdales et vermiculaires, dans un moule comportant au moins une portion de paroi de type refroidisseur.

## Claims

1. Molds for glass making, obtained by molding a cast iron, characterized in that they are constituted, for the portion of said molds designed to come into contact with molten glass, by a thickness of 5 to 25 mm of nodular spheroïdal cast iron and for the remainder of said molds by cast iron of which the structure progressively develops in material thickness from nodular spheroïdal towards vermicular.

2. A method of preparing molds for glass making having the structure defined in claim 1, characterized in that a molten cast iron, containing suitable quantities of known catalysts and additives for giving rise to nodular spheroidal and to vermicular cast irons is cast into a mold including at least one wall portion which is of the chiller type.

**Ansprüche**

1. Durch Formgießen von Gußeisen hergestellte Formen für die Glasindustrie, dadurch gekennzeichnet, daß sie hinsichtlich des in Kontakt mit dem geschmolzenen Glas zu gelangenden Formenteils aus 5 bis 25 mm dickem Gußeisen mit Kugelgrafit und für den Rest der Formen aus einem Gußeisen bestehen, dessen Struktur in der Werkstoffdicke progressiv vom Kugelgrafittyp zum Vermikulartyp übergeht.

2. Verfahren zur Herstellung von Formen für die Glasindustrie mit der in Anspruch 1 definierten Struktur, dadurch gekennzeichnet, daß man schmelzflüssiges Gußeisen, das für die Bildung von Kugelgrafitgußeisen und Vermikulargußeisen zweckmäßige Mengen an bekannten Katalysatoren und Additiven umfaßt, in eine Form gießt, die mindestens einen kühlenden Wandabschnitt aufweist.